# EUROPEAN PATENT SPECIFICATION

(11) **EP 3 279 066 B1**
(45) Date of publication and mention of the grant of the patent: **05.06.2019**
(21) Application number: 17183621.6
(22) Date of filing: 27.07.2017
(51) Int. Cl.: B62J 25/00

(54) **STEP STRUCTURE OF SADDLE-RIDE TYPE VEHICLE**
FUSSRASTENSTRUKTUR FÜR EIN SATTELFAHRZEUG
STRUCTURE DE SUPPORT DE PIEDS DE VÉHICULE DE TYPE À ENFOURCHER

(30) Priority: 04.08.2016 JP 2016153479
(43) Date of publication of application: 07.02.2018
(73) Proprietor: HONDA MOTOR CO., LTD., Tokyo 107-8556 (JP)
(72) Inventor: YOKOYAMA, Yuichi, Wako-shi, Saitama 351-0193 (JP)
(74) Representative: Piésold, Alexander James

(56) References cited:
- EP-A2- 2 055 622
- JP-A- S6 261 888
- US-A1- 2002 158 441
- US-A1- 2006 181 054

## Description

The present invention relates to a step structure of a saddle-ride type vehicle.

Conventionally, such a step structure of a saddle-ride type vehicle is known that allows one clamping member to fix a main step capable of selecting a plurality of positions (for example, refer to JP-A No. 2015-85888). JP-A No. 2015-85888 discloses a shaft portion, and an insertion hole of a main step. The shaft portion is provided in a body frame and has a cross section of a regular polygon. The insertion hole has a cross section of a regular polygon. Engaging the insertion hole with the shaft portion causes a clamping member fix the main step to the shaft portion, where the clamping member is mounted from the outside in a vehicle width direction. An external peripheral portion of the above main step includes a plurality of step portions having different distances from the shaft portion. Allowing the main step to be mountable to the shaft portion at a plurality of rotational angles makes it possible to select a plurality of positions.

JP S62 61888, which is considered to be the closest prior art according to the preamble of claim 1, discloses a mounting structure for a footrest of a motorcycle. The footrest is held by a rotor having a fixing means for fixing the position of the rotor and preventing its rotation. To move the footrest, the fixing means may be loosened such that the rotor may be rotated about its axis.

However, according to the conventional step structure set forth above, the clamping member mounted from the outside in the vehicle width direction fixes the main step. Due to this, the clamping member can be easily visible from the side of the saddle-ride type vehicle, causing an influence on an external view. Further, the main step is a portion which ordinarily receives a load of an occupant. Due to this, the main step is required to have a load endurance. When the one clamping member mounted from the outside in the vehicle width direction fixes the main step, however, the shaft portion substantially needs to have a regular polygon so as to prevent the main step from being rotated by the load. This complicates the structure of the main step.

The present invention has been achieved in view of the above-mentioned circumstances. It is an object of at least the preferred embodiments of the present invention, in a step structure of a saddle-ride type vehicle including a main step capable of selecting a plurality of positions, to improve an external view, and to improve a load endurance of the main step with a simple structure.

The present invention provides a step structure of a saddle-ride type vehicle, comprising: a main step; a rotor for supporting the main step; and a holding portion for rotatably holding the rotor to a part of a frame, the rotor being rotatable such that a position of the main step is selectable in a plurality of steps, wherein the step structure further includes a regulating member for regulating the rotation of the rotor, and wherein the regulating member is adapted to be inserted into at least one open port from an outside toward an inside in a radial direction of the rotor, the at least one open port being provided in the holding portion, characterized in that the rotor includes a rotary member and a step-holding member, the rotary member being held to the holding portion, the step-holding member being provided separate from the rotary member and supporting the main step, and the step-holding member is inserted into the rotary member in a radial direction of the rotary member, such that a movement of the step-holding member is regulated by an end portion of the regulating member.

According to the structure of the present invention, the step structure of the saddle-ride type vehicle includes the regulating member for regulating the rotation of the rotor for supporting the main step, and, from the outside toward the inside in the radial direction of the rotor, the regulating member is adapted to be inserted into the open port provided in the holding portion. Due to this, the regulating member inserted from the outside toward the inside in the radial direction of the rotor is unlikely to be visible from the side of the vehicle, thus making it possible to improve an external view by preventing the regulating member from becoming remarkable. Further, the load in the rotary direction of the rotor can be received with the regulating member inserted in the radial direction of the rotor. Due to this, the load endurance of the main step can be improved with a simple structure.

Further, according to the structure of the present invention, the step-holding member is inserted into the rotary member in the radial direction of the rotary member, such that the movement of the step-holding member is regulated by the end portion of the regulating member. By this, the position of the step-holding member can be adjusted into the direction for inserting the step-holding member and is thereby fixed with the end portion of the regulating member. Due to this, in combination with the positon-adjusting by the rotation of the rotor, the position of the main step can be adjusted in a plurality of steps. Further, position-adjusting of each of the rotary member and the step-holding member can change the position of the main step. Due to this, the main step can be simplified in configuration, thus making it possible to improve an external view.

Further, the step structure of the present invention may have a structure in which the rotor includes a rotation-regulating portion with which the regulating member mates, the regulating member being inserted into the at least one open port of the holding portion, and the at least one open port includes a plurality of open ports provided in a circumferential direction of the holding portion.

According to such a structure, the plurality of the open ports are provided in a circumferential direction of the holding portion. Due to this, inserting the regulating member into any of the plurality of the open ports provided in the circumferential direction of the holding portion to thereby have the regulating member mate with the rotation-regulating portion of the rotor can fix the rotor in a plurality of rotary positions. Further, providing the open ports in the holding portion can secure a space for providing open ports larger than a space secured in the case of providing any other member positioned inside the holding portion in the radial direction. Thus, the plurality of open ports can be provided with ease.

Further, the step structure of the present invention may have a structure in which the rotor includes at least one rotation-regulating portion with which the regulating member mates, the regulating member being inserted into the open port of the holding portion, and the at least one rotation-regulating portion includes a plurality of rotation-regulating portions provided in a circumferential direction of the holding portion.

According to such a structure, the plurality of rotation-regulating portions of the rotor are provided in the circumferential direction of the holding portion. Due to this, having the regulating member mate with any of the plurality of rotation-regulating portions provided in the circumferential direction can fix the rotor in the plurality of rotary positions. Further, the plurality of rotation-regulating portions are provided in the circumferential direction of the holding portion. Due to this, the open port of the holding portion can be made one in number. Due to this, the open port of the holding portion can be prevented from being remarkable, thus making it possible to improve an external view.

Further, the step structure of the present invention may have a structure in which the step-holding member includes at least one movement-regulating portion with which the end portion of the regulating member mates, and the at least one movement-regulating portion includes a plurality of movement-regulating portions provided in a direction for inserting the step-holding member to the rotary member.

According to such a structure, the plurality of the movement-regulating portions are provided in a direction for inserting the step-holding member to the rotary member. Due to this, mating the end portion of the regulating member with any of the plurality of the movement-regulating portions can fix the step-holding member to the plurality of positions.

Further, the step structure of the present invention may have a structure in which the step-holding member includes a step-holding portion and a shaft portion, the main step is mounted to the step-holding portion, and the shaft portion extends out from the step-holding portion and is inserted into an inserting portion of the rotary member.

According to such a structure, the step-holding member includes the step-holding portion and the shaft portion, the main step is mounted to the step-holding portion, and the shaft portion extends out from the step-holding portion and is inserted into an inserting portion of the rotary member. Due to this, adjusting the position for inserting the shaft portion of the step-holding member into the inserting portion of the rotary member can change the position of the main step.

Further, the step structure of the present invention may have a structure in which a base end portion of the shaft portion includes a taper portion so inclined that the shaft portion becomes thicker as the taper portion approaches closer to the step-holding portion side, and the inserting portion of the rotary member includes an inlet portion for receiving the taper portion, while the inlet portion is so inclined as to abut on the taper portion.

According to such a structure, the inserting portion of the rotary member includes the inlet portion for receiving the taper portion in the base portion of the shaft portion, while the inlet portion is so inclined as to abut on the taper portion. Due to this, the taper portion can work to secure the strength and rigidity of the shaft portion, and the taper portion abutting on the inlet portion can determine a position of the shaft portion in the direction of inserting the shaft portion and in a direction orthogonal to this inserting direction. Further, forming the taper portion can enlarge the area of contact of the shaft portion's base end portion with the inlet portion, thus making it possible to reduce the load applied to the inlet port.

Further, the step structure of the present invention may have a structure in which the step-holding member includes a guide portion protruding in the radial direction of the rotary member from the shaft portion, and the rotary member includes a groove portion into which the guide portion is inserted.

According to such a structure, the rotary member includes the groove portion into which the guide portion is inserted, and the guide portion protrudes in the radial direction of the rotary member from the shaft portion. By this, the guide portion can improve the strength and rigidity of the shaft portion and can position the step-holding member in the axial direction of the rotary member.

Further, the step structure of the present invention may have a structure in which the shaft portion of the step-holding member is a shaft with an external configuration of a rectangle, and the inserting portion of the rotary member includes: an upper guide face adapted to abut on an upper face of the shaft portion; a lower guide face adapted to abut on a lower face of the shaft portion; an inside guide face adapted to abut on an inside face in a vehicle width direction of the shaft portion; and an open portion for allowing an outside face in the vehicle width direction of the shaft portion to be exposed outward.

According to such a structure, allowing the shaft portion with an external configuration of a rectangle to abut on the upper guide face and lower guide face of the inserting portion can prevent the step-holding member from making a rotation around the shaft portion. Further, the inserting portion of the rotary member includes the open portion opened on the outside face in the vehicle width direction. This can form the inserting portion with ease. Also, by this, in a compact manner, the rotary member can be made in the vehicle width direction.

Further, the step structure of the present invention may have a structure in which the shaft portion is inserted into the inserting portion of the rotary member and thereby radially passes through the rotary member, and the holding portion includes a front open port into which a distal end portion of the shaft portion is inserted.

According to such a structure, the holding portion includes a front open port into which a distal end portion of the shaft portion is inserted, and the distal end portion of the shaft portion passes through the rotary member in the radial direction. By this, the rotatable range of the rotary member can be regulated to a range in which the distal end portion of the shaft portion is moveable in the front face open port.

Further, the step structure of the present invention may have a structure in which the frame is a pivot frame for supporting a swing arm via a pivot shaft, and the swing arm pivotally supports a rear wheel.

According to such a structure, rotating the rotor around the holding portion provided at the pivot frame can adjust the position of the main step.

Further, the step structure of the present invention may have a structure in which an operating portion to which an operation is input by a rider is mounted to the rotor.

According to such a structure, adjusting the position of the rotor allows the operating portion to move integrally with the rotor. Due to this, even when the position of the main step is adjusted, the main step's position relative to the operating portion can be maintained.

Further, the step structure of the present invention may have a structure in which the regulating member is inserted from an upper side into any of the open ports of the holding portion.

According to such a structure, the regulating member is inserted from the upper side into any of the open ports of the holding portion. Due to this, the regulating member can be easily inserted into the open port.

### [Advantageous Effects of Invention]

In the step structure of the saddle-ride type vehicle according to the present invention, the external view can be improved by preventing the regulating member from becoming remarkable and also the load endurance of the main step can be improved with the simple structure.

Further, the step structure can adjust the position of the main step in the plurality of steps in the direction for inserting the step-holding member and in the direction for rotating the rotor.

Further, in embodiments, the plurality of open ports provided in the circumferential direction of the holding portion can fix the rotor to the plurality of rotational positions. Further, the step structure can secure the large space for providing open ports, thus making it possible to provide the plurality of open ports with ease.

Further, in embodiments, the plurality of rotation-regulating portions provided in the circumferential direction can fix the rotor to the plurality of rotational positions. Further, the open port of the holding portion can be made one in number, thus making it possible to improve the external view.

Further, in embodiments, the movement-regulating portion can fix the step-holding member to the plurality of positions.

Further, in embodiments, adjusting the position for inserting the shaft portion of the step-holding member into the inserting portion of the rotary member can change the position of the main step.

Further, in embodiments, the taper portion can work to secure the strength and rigidity of the shaft portion, and the taper portion can determine the position of the shaft portion with ease. Further, the load applied to the inlet port of the rotary member can be reduced.

Further, in embodiments, the guide portion can improve the strength and rigidity of the shaft portion and can position the step-holding member in the axial direction of the rotary member.

Further, in embodiments, the rectangular configuration of the shaft portion can prevent the step-holding member from rotating around the shaft portion. Further, the inserting portion of the rotary member can be formed with ease, and in the compact manner, the rotary member can be made in the vehicle width direction.

Further, in embodiments, the rotatable range of the rotary member can be regulated to the range in which the distal end portion of the shaft portion is moveable in the front face open port.

Further, in embodiments, rotating the rotor around the holding portion provided at the pivot frame can adjust the position of the main step.

Further, in embodiments, even when the position of the main step is adjusted, the main step's position relative to the operating portion can be maintained.

Further, in embodiments, from the upper side, the regulating member can be easily inserted into the open ports.

An embodiment of the present invention will be explained, by way of example only, and with reference to the accompanying drawings, in which:
FIG. 1 is a right side view of a motorcycle according to the embodiment of the present invention;
FIG. 2 is a right side view showing a step structure of a right main step of the motorcycle;
FIG. 3 is a plan view of the right step structure, viewed from the upper side;
FIG. 4 is a right side view showing a state in which the position of the main step of the right step structure is changed from the position in the state in FIG. 2;
FIG. 5 is s right side view of a holding portion of a pivot frame;
FIG. 6 is a right side view of a step-holding member;
FIG. 7 is a plan view of the step-holding member, viewed from the upper side;
FIG. 8 is a right side view of a rotary member; and
FIG. 9 is a front view of the rotary member, viewed from the frontward side.

In the explanation, any description of directions such as front and rear, right and left, and upper and lower is the same as the direction relative to a vehicle body unless specifically described. Further, in each drawing, the symbol FR denotes a front direction of the vehicle body, the symbol UP denotes an upward direction of the vehicle body and the symbol RH denotes a rightward direction of the vehicle body.

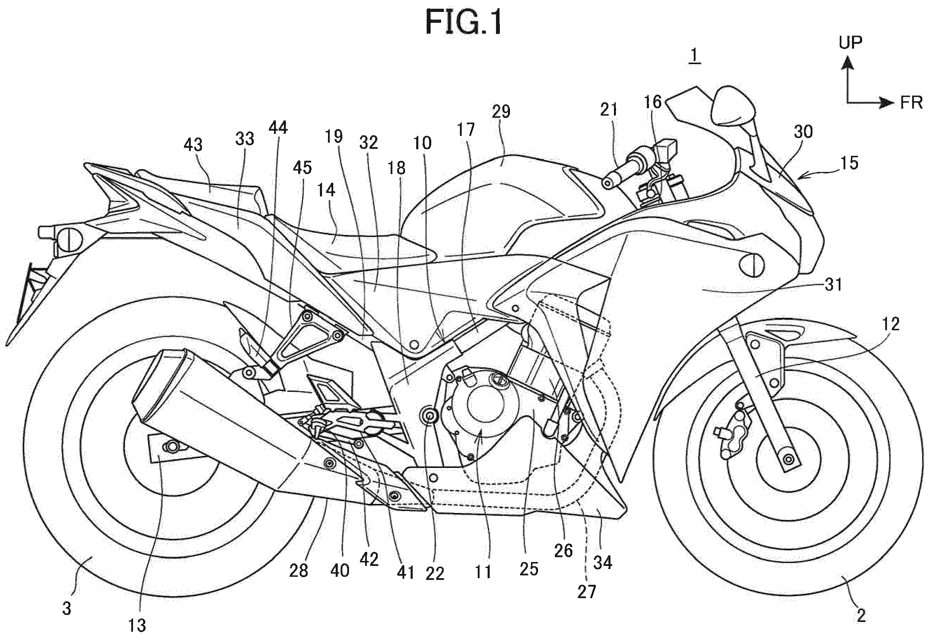

FIG. 1 is a right side view of a motorcycle according to the embodiment of the present invention. Further, in FIG. 1, those provided in a pairwise manner (right and left) are to be shown with the one on the right side only.

A motorcycle 1 is a vehicle in which an engine 11 as a power unit is supported to a body frame 10, a front fork 12 for supporting a front wheel 2 is steerably supported to the front end of the body frame 10, and a swing arm 13 for supporting a rear wheel 3 (wheel) is provided on the rear portion side of the body frame 10. The motorcycle 1 is a saddle-ride type vehicle. In the motorcycle 1, a seat 14 is provided above the rear portion of the body frame 10, where a rider is seated on the seat 14 in a manner to stride over the seat 14.

The motorcycle 1 includes a body cover 15 for covering the body frame 10, the engine 11 and the like.

The body frame 10 includes a head pipe 16, a pair of right and left main frames 17, 17, a pair of right and left pivot frames 18, 18 (frame), a pair of right and left seat frames 19, 19 and a down frame (not shown), where the head pipe 16 is provided at the front end, the main frames 17, 17 extend downward to the rear from the head pipe 16, the pivot frames 18, 18 extend downward from the rear end of the main frames 17, 17, the seat frames 19, 19 extend from the upper portion of the pivot frames 18, 18 upward to the rear portion of the vehicle, and the down frame extends downward from the front portion of the main frames 17, 17.

The front fork 12 is turnably journaled to the head pipe 16 via a steering shaft (not shown). The front wheel 2 is journaled to the lower end portion of the front fork 12. A handlebar 21 for steering operation is fixed to the upper end of the front fork 12.

The swing arm 13 is disposed between the right and left pivot frames 18, 18. The swing arm 13 is turnably journaled with a pivot shaft 22, where the pivot shaft 22 is inserted into the right and left pivot frames 18, 18 in the vehicle width direction. The rear wheel 3 is journaled to the rear end of the swing arm 13.

The engine 11 is supported to the body frame 10 in a manner to be suspended downward. The engine 11 is positioned on the front side of the pivot frames 18, 18 and below the main frames 17, 17.

The engine 11 includes a crankcase 25 and a cylinder portion 26. The crankcase 25 receives a crank shaft. The cylinder portion 26 extends upward from the front portion of the crankcase 25 and receives a piston.

An exhaust device of the engine 11 includes an exhaust pipe 27 and a muffler 28. The exhaust pipe 27 is pulled out rearward from a cylinder head of the cylinder portion 26, and the muffler 28 is connected to the rear end of the exhaust pipe 27.

A fuel tank 29 is positioned on the front side of the seat 14 and above the main frames 17, 17.

The body cover 15 includes a front cover 30, a front side cover 31, a center cover 32, a rear cover 33 and an under cover 34. The front cover 30 covers the head pipe 16 from the front side. The front side cover 31 covers the front portion of the body frame 10 and the upper portion of the engine 11. The center cover 32 covers the upper portion of the main frames 17, 17 from the side portion. The rear cover 33 covers the seat frames 19, 19 from the side portion. The under cover 34 covers the crankcase 25 from the lower side.

A pair of right and left main steps 40, 40 are supported with a pair of right and left step holders 41, 41 (rotors), where the main steps 40, 40 are for the rider seated on the seat 14 to put his or her foot on, and the step holders 41, 41 extend rearward from the pivot frames 18, 18.

A brake pedal 42 (operating portion) is mounted to the right step holder 41, where the brake pedal 42 is for operating a braking device of the rear wheel 3.

A shift pedal (not shown) for shifting a transmission of the engine 11 is mounted to the left step holder 41.

A rear seat 43 is provided on the rear side of the seat 14. A pair of right and left tandem steps 44, 44 are supported to a pair of right and left tandem step holders 45, 45, where the tandem steps 44, 44 are for a pillion passenger seated on the rear seat 43 to put his or her foot on, and the tandem step holders 45, 45 extend downward from seat frames 19, 19.

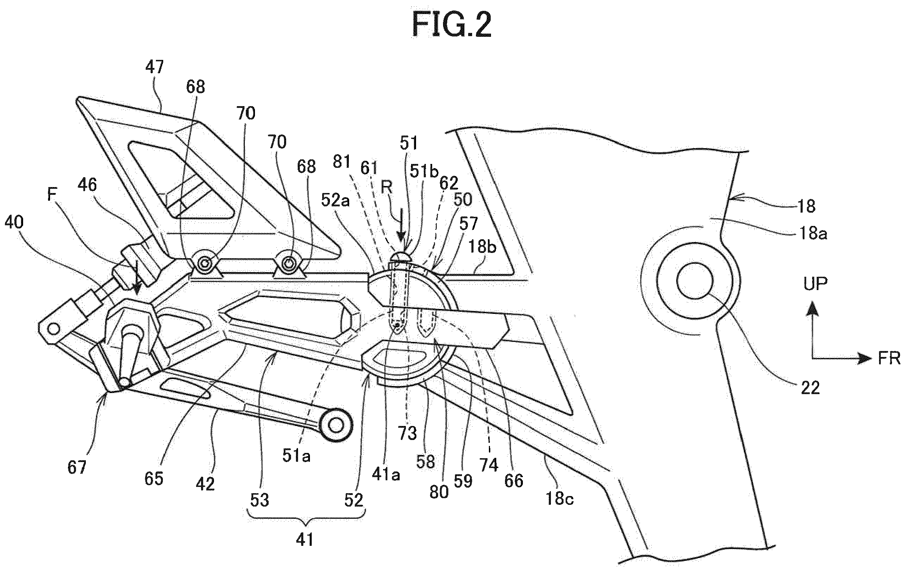

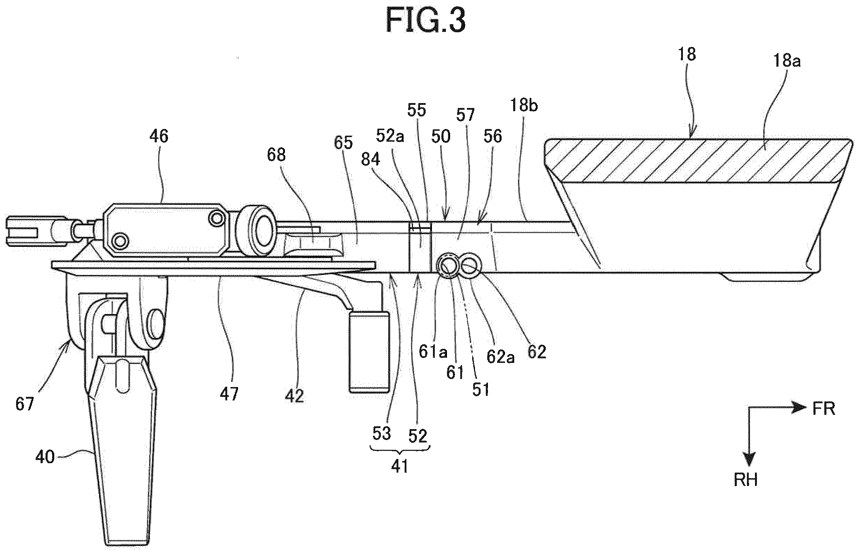

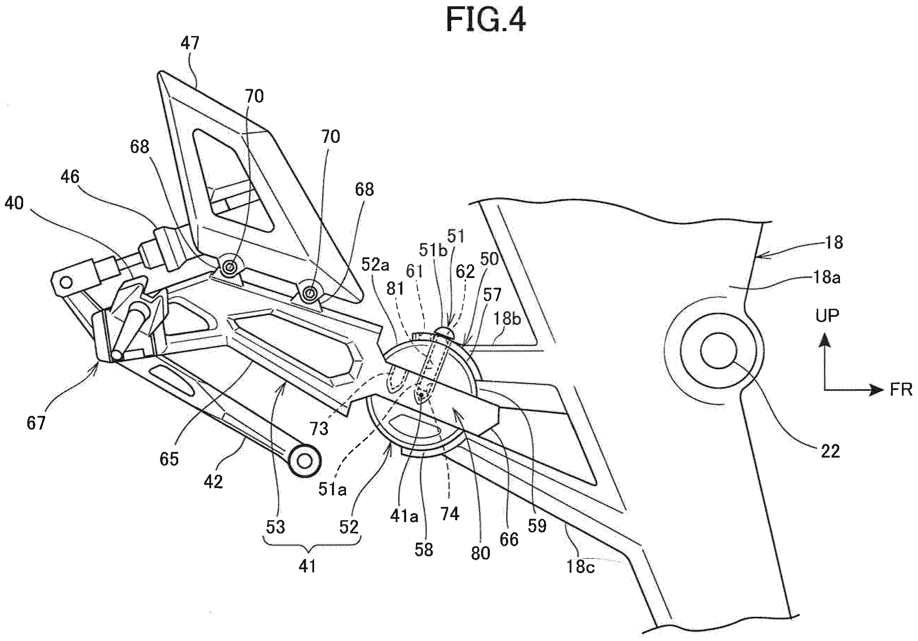

FIG. 2 is a right side view showing a step structure of the right main step 40 of the motorcycle 1. FIG. 3 is a plan view of the right step structure, viewed from the upper side. FIG. 4 is a right side view showing a state in which the position of the main step 40 of the right step structure is changed from the position in the state in FIG. 2. Further, the step structures of the right and left main steps 40, 40 are formed substantially symmetrical (right and left). Due to this, detailed explanation hereinafter will be made only about the right step structure.

The step structure is so configured that the step holder 41 for supporting the main step 40 is made rotatable around a rotary center 41a of the step holder 41, so that the position of the main step 40 is selectable in a plurality of steps.

The step structure includes a holding portion 50, the step holder 41, a bolt 51 and the main step 40. The holding portion 50 is provided in the right pivot frame 18 and holds the step holder 41. The bolt 51 serves as a regulating member for regulating the rotation of the step holder 41.

The step holder 41 includes a rotary member 52 and a step-holding member 53. The rotary member 52 in a form of a circular plate is held to the holding portion 50. In the holding portion 50, the rotary member 52 rotates around the rotary center 41a. The main step 40 is mounted to the step-holding member 53. The step-holding member 53 is provided as a member separate from the rotary member 52.

Further, the brake pedal 42, a master cylinder 46 and a cover 47 are mounted to the step-holding member 53. The brake pedal 42 is for the rider to operate, with his or her foot, a hydraulic braking device of the rear wheel 3. The master cylinder 46 causes a hydraulic pressure with the operation of the brake pedal 42. The cover 47 covers the master cylinder 46 from the outside in the vehicle width direction.

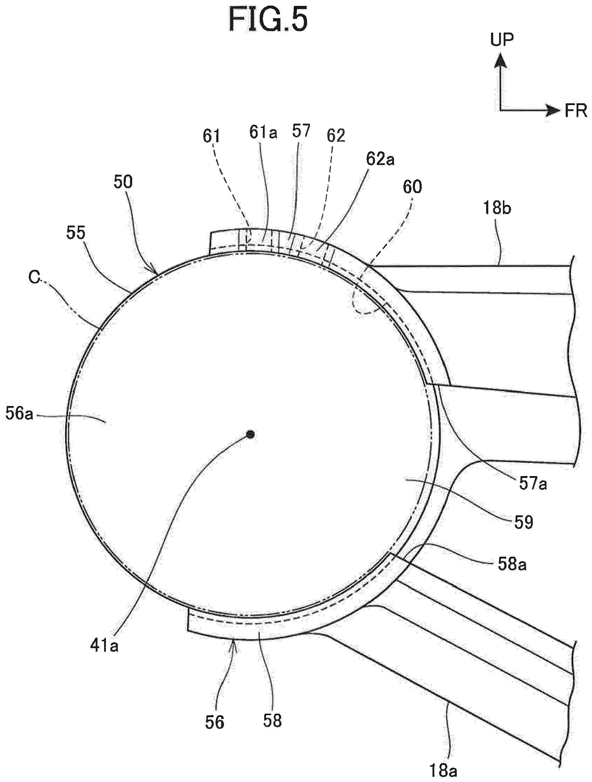

FIG. 5 is s right side view of the holding portion 50 of the pivot frame 18.

Referring to FIG. 2 to FIG. 5, the pivot frame 18 is so configured that, with the vehicle width direction of a plate portion 18a as a plate thickness direction of the plate portion 18a, the plate portion 18a serves as a main body. The pivot shaft 22 is inserted into the front portion of the plate portion 18a.

The pivot frame 18 includes a pair of upper and lower coupled portions 18b, 18c. The coupled portions 18b, 18c each is in a form of a pillar extending rearward from the rear portion of the plate portion 18a. The holding portion 50 is integrally coupled with the rear end position of each of the coupled portions 18b, 18c and is positioned on the rear side of the pivot shaft 22.

The holding portion 50 includes an internal wall portion 55 and a peripheral wall portion 56. The internal wall portion 55 receives the rotary member 52 of the step holder 41 from the inside in the vehicle width direction. The peripheral wall portion 56 receives an external peripheral portion 52a of the rotary member 52.

In side view, along the external configuration of the rotary member 52, the internal wall portion 55 is in a form of a circular plate. The internal wall portion 55 is in a form of a circular plate substantially orthogonal to a line extending in the vehicle width direction. The internal wall portion 55 is disposed in a direction substantially orthogonal to an axial line of the pivot shaft 22.

The peripheral wall portion 56 of the holding portion 50 is arranged upright from the peripheral edge portion of the circular internal wall portion 55 outward in the vehicle width direction. In side view, the peripheral wall portion 56 is formed into a circular arc in a manner to extend along the external peripheral portion 52a of the rotary member 52. In detail, the peripheral wall portion 56 is provided in the peripheral edge portion of the front half portion of an imaginary circle C (FIG. 5) and in the peripheral edge portion of the front end of the rear half portion of the imaginary circle. Around the rotary center 41a, the peripheral edge portion is along the external peripheral portion 52a of the rotary member 52. The peripheral wall portion 56 is free from being provided in the most part of the rear half portion of the circle C. That is, a rear open port 56a opened on the rearward side is formed in the rear half portion of the peripheral wall portion 56 of the holding portion 50. Herein, a radial direction of the circle C is consistent with a radial direction of each of the peripheral wall portion 56 and the rotary member 52.

The peripheral wall portion 56 includes an upper peripheral wall portion 57 and a lower peripheral wall portion 58. On the front half portion of the circle C, the upper peripheral wall portion 57 covers the external peripheral portion 52a of the rotary member 52 from the upper side. On the front half portion of the circle C, the lower peripheral wall portion 58 covers the external peripheral portion 52a of the rotary member 52 from the lower side. Between a lower end 57a of the upper peripheral wall portion 57 and an upper end 58a of the lower peripheral wall portion 58, a front open port 59 is formed. The front open port 59 allows the inside space of the peripheral wall portion 56 to be opened on the frontward side.

On an inside face of the base end portion of the peripheral wall portion 56, a guide groove 60 is formed in the entire circumference. The guide groove 60 is formed in a manner that this inside face is dented outward in the radial direction of the peripheral wall portion 56.

On the upper face of the upper peripheral wall portion 57 of the holding portion 50, a plurality of open ports 61, 62 are provided. The open ports 61, 62 pass through the upper peripheral wall portion 57 in the radial direction of the peripheral wall portion 56. The open ports 61, 62 are each a hole in a form of a circle. In a juxtaposed manner, a plurality of open ports 61, 62 are disposed in a circumferential direction of the peripheral wall portion 56. The open port 62 is positioned on the front side of the open port 61. Further, the open ports 61, 62 are so disposed to be closer to the outside part in the vehicle width direction of the upper peripheral wall portion 57. The upper peripheral wall portion 57 includes protruding portions 61a, 62a. From a portion where the upper peripheral wall portion 57 overlaps with the respective open ports 61, 62 in side view, the protruding portions 61a, 62a respectively protrude outward in the vehicle width direction.

The open ports 61, 62 are each a through hole into which the bolt 51 is inserted.

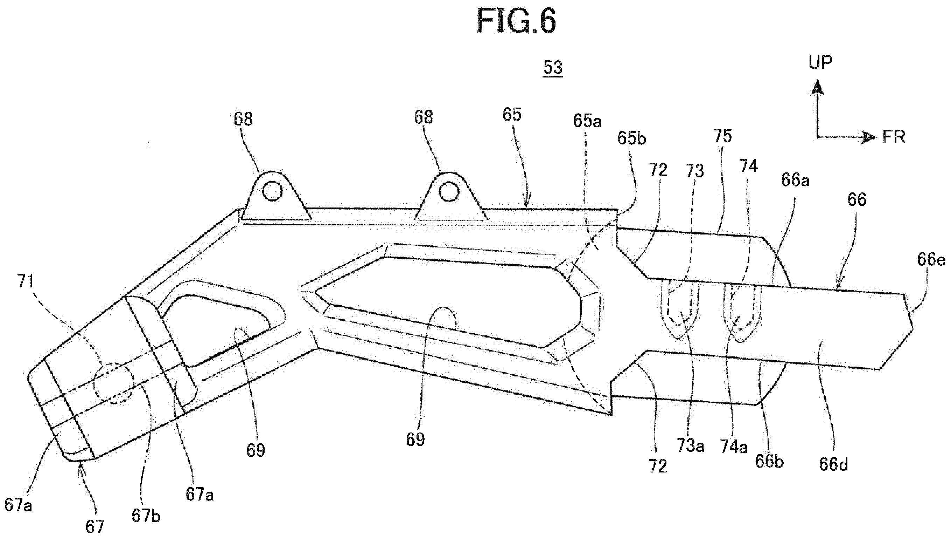

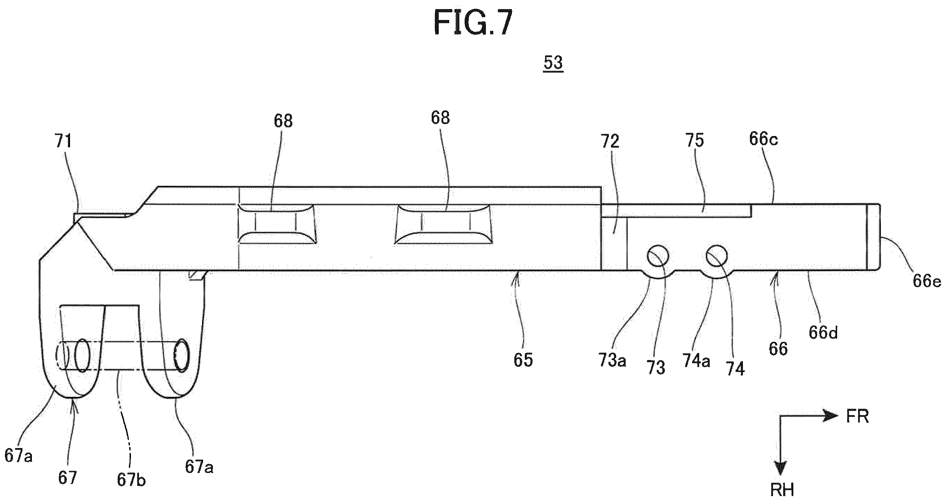

FIG. 6 is a right side view of the step-holding member 53. FIG. 7 is a plan view of the step-holding member 53, viewed from the upper side.

Referring to FIG. 2 to FIG. 7, the step-holding member 53 includes a step-holding portion 65 and a shaft portion 66. The main step 40 is mounted to the step-holding portion 65. The shaft portion 66 extends frontward from the front end of the step-holding portion 65 and is inserted into the rotary member 52.

The step-holding portion 65 is in a form of a plate which is longer in a frontward and rearward direction than in a vertical direction. The step-holding portion 65 includes a step-mounting portion 67, a stay portion 68 and a lightening hole 69. The main step 40 is mounted to the step-mounting portion 67. The master cylinder 46 is mounted to the stay portion 68.

The step-mounting portion 67 has a rear end portion including a pair of plate portions 67a, 67a protruding outward in the vehicle width direction. Via a step support shaft 67b inserted into the plate portions 67a, 67a, the step-mounting portion 67 supports the main step 40.

The stay portion 68 extends upward from the upper face of the step-holding portion 65. The master cylinder 46 is fixed to the stay portion 68 and is positioned on the upper side of the step-holding portion 65. The cover 47 is co-clamped to the stay portion 68 with a master cylinder fixing bolt 70. The master cylinder fixing bolt 70 fixes the master cylinder 46 to the stay portion 68.

The brake pedal 42 is rotatably journaled via a pedal shaft 71. The pedal shaft 71 is provided on the inside face in the rear end portion of the step-holding portion 65.

A step portion 65a is formed on the inside face in the vehicle width direction in the front end portion of the step-holding portion 65. The step portion 65a is dented outward in the vehicle width direction.

The shaft portion 66 of the step-holding member 53 linearly extends from the upper and lower middle portions to the front side in the front end of the step-holding portion 65. The shaft portion 66 is a rectangular rod with an external configuration of a rectangle. When viewed in an axial direction, the shaft portion 66 has a cross section which is substantially a square. The shaft portion 66 includes an upper face 66a, a lower face 66b, an inside face 66c, an outside face 66d and a distal end face 66e. The upper face 66a extends in the frontward and rearward direction. The lower face 66b is parallel to the upper face 66a. The inside face 66c is on the inside in the vehicle width direction. The outside face 66d is on the outside in the vehicle width direction. The step portion 65a of the step-holding portion 65 is formed flush with the inside face 66c.

In the upper face 66a and lower face 66b of the shaft portion 66, taper portions 72, 72 are formed in the portion of the base end portion of the shaft portion 66. The taper portions 72, 72 are so inclined that the shaft portion 66 becomes thicker upward and downward respectively as the taper portions 72, 72 approach closer to a front end face 65b side of the step-holding portion 65. The taper portions 72, 72 work to increase the shaft portion 66 in strength and rigidity.

Movement-regulating portions 73, 74 are formed in the upper face 66a of the shaft portion 66. A distal end portion 51a of the bolt 51 inserted from any of the open ports 61, 62 of the holding portion 50 mates with any of the movement-regulating portions 73, 74.

In a juxtaposed manner, a plurality of movement-regulating portions 73, 74 are disposed in the direction for inserting the shaft portion 66 into the rotary member 52, that is, in the frontward and rearward direction. The movement-regulating portion 74 is positioned on the front side of the movement-regulating portion 73.

The movement-regulating portions 73, 74 are each a screw hole extending in the vertical direction. A screw portion formed on the distal end portion 51a (FIG. 2) of the bolt 51 is clamped to any of the movement-regulating portions 73, 74.

The movement-regulating portions 73, 74 are so disposed to get closer to the outside portion in the vehicle width direction of the shaft portion 66. Protruding portions 73a, 74a are formed on the outside face 66d of the shaft portion 66. From a portion where the protruding portions 73a, 74a respectively overlap with the movement-regulating portions 73, 74 in side view, the protruding portions 73a, 74a respectively protrude outward in the vehicle width direction.

Further, the step-holding member 53 includes a guide portion 75. The guide portion 75 is in a form of a plate protruding from the shaft portion 66 in a radial direction of the rotary member 52. The guide portion 75 extends upward and downward respectively from the edge portion on the inside, in the vehicle width direction, of the upper face 66a and lower face 66b of the shaft portion 66, and the guide portion 75 extends to front and rear middle portions of the shaft portion 66 in an axial direction of the shaft portion 66.

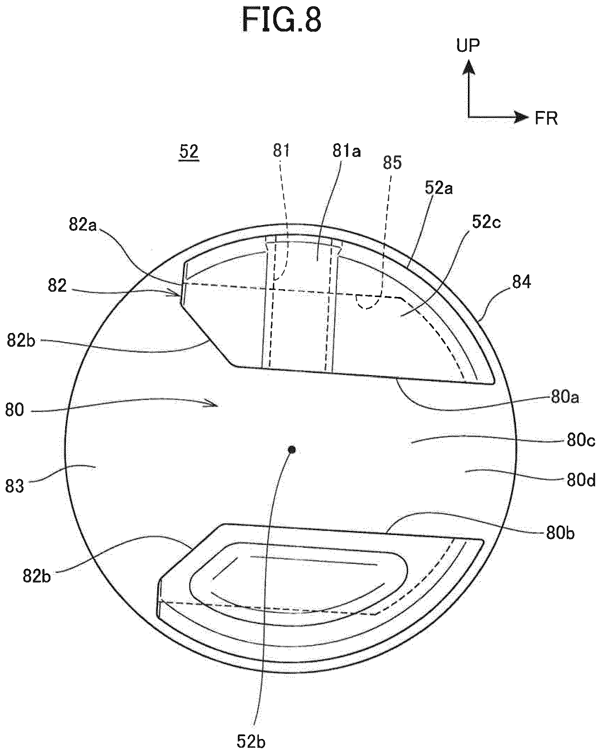

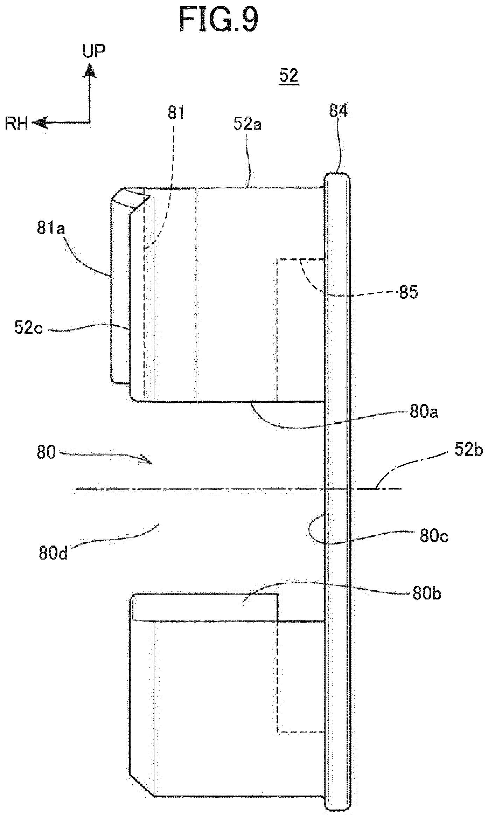

FIG. 8 is a right side view of the rotary member 52. FIG. 9 is a front view of the rotary member 52, viewed from the frontward side.

Referring to FIG. 8 and FIG. 9, the rotary member 52 is a circular plate member disposed in such a direction that an axial line 52b of the rotary member 52 extends in the vehicle width direction.

The rotary member 52 includes an inserting portion 80 and a rotation-regulating portion 81. The inserting portion 80 passes through the rotary member 52 in the radial direction. The bolt 51 mates with the rotation-regulating portion 81.

From the rear side, the shaft portion 66 of the step-holding member 53 is inserted into the inserting portion 80. The inserting portion 80 is a through hole passing through from the rear face to front face of the external peripheral portion 52a of the rotary member 52. Through the axial line 52b, the inserting portion 80 linearly extends frontward and rearward.

In detail, the inserting portion 80 is a rectangular hole portion opened outward in the vehicle width direction. The inserting portion 80 includes an upper guide face 80a, a lower guide face 80b, an inside guide face 80c and an open portion 80d. The upper guide face 80a is adapted to abut on the upper face 66a of the shaft portion 66. The lower guide face 80b is adapted to abut on the lower face 66b. The inside guide face 80c is adapted to abut on the inside face 66c. The open portion 80d allows the outside face 66d to be exposed outward in the vehicle width direction.

An inlet portion 82 is formed in the rear end portion of the inserting portion 80. The inlet portion 82 is an inlet port for inserting the shaft portion 66. The inlet portion 82 includes a receiving face 82a and inclined portions 82b, 82b. The receiving face 82a is adapted to abut on the front end face 65b of the step-holding portion 65. The inclined portions 82b, 82b are adapted to abut on the taper portions 72, 72 of the shaft portion 66. The inclined portions 82b, 82b are so inclined that, when approaching closer to the inlet side of the inserting portion 80, the upper and lower dimension of the inserting portion 80 becomes larger.

Further, a wall portion 83 is provided in the rear end portion of the rotary member 52. The wall portion 83 is adapted to abut on the inside face in the vehicle width direction of the front end portion of the step-holding portion 65. In detail, the wall portion 83 is adapted to abut on the step portion 65a in the front end of the step-holding portion 65. The wall portion 83 is formed flush with the inside guide face 80c.

Regarding the external peripheral portion 52a of the rotary member 52, in the inner end portion in the vehicle width direction, a flange portion 84 is provided in the entire circumference. The flange portion 84 protrudes outward in the radial direction. The flange portion 84 is adapted to be inserted into the guide groove 60 of the holding portion 50.

Further, the rotary member 52 includes a groove portion 85. The guide portion 75 of the step-holding member 53 is adapted to be inserted into the groove portion 85. Along the inserting portion 80 extending frontward and rearward, the groove portion 85 is positioned on the upside and downside of the inserting portion 80.

The rotation-regulating portion 81 of the rotary member 52 is a through hole extending in the radial direction of the rotary member 52. The bolt 51 is inserted into the rotation-regulating portion 81.

The rotation-regulating portion 81 passes through from the external peripheral portion 52a on the upper side of the rotation-regulating portion 81 to the inner portion of the inserting portion 80.

The rotation-regulating portion 81 is disposed closer to the outside portion in the vehicle width direction of the rotary member 52. A protruding portion 81a is formed on an outside face 52c of the rotary member 52. From a portion where the protruding portion 81a overlaps with the rotation-regulating portion 81 in side view, the rotation-regulating portion 81a protrudes outward in the vehicle width direction.

Referring to FIG. 2, FIG. 5, FIG. 6 and FIG. 8. the step holder 41 is so configured that the shaft portion 66 of the step-holding member 53 is inserted into the inserting portion 80 of the rotary member 52. The rotary member 52 is received in the peripheral wall portion 56 of the holding portion 50 and the external peripheral portion 52a is guided in the internal peripheral portion of the peripheral wall portion 56. Thereby, the rotary member 52 makes a rotation around the rotary center 41a. The rotary center 41a is consistent with the axial line 52b of the rotary member 52. That is, the step holder 41 is a rotor which makes a rotation via the rotary member 52 rotatably supported to the holding portion 50.

Further, in the inserting portion 80 of the rotary member 52, moving the shaft portion 66 in the axial direction can move the step-holding member 53 frontward and rearward.

In the state in FIG. 2, the bolt 51 inserted from the upper side into the open port 61 of the holding portion 50 passes through the rotation-regulating portion 81 of the rotary member 52 in the radial direction of the rotary member 52 as denoted by an arrow R. Then, the distal end portion 51a of the bolt 51 mates with the movement-regulating portion 73 of the shaft portion 66 of the step-holding member 53 and then is clamped to the movement-regulating portion 73. In this state, when a load F of the rider acts on the main step 40, the rotary member 52 receives such a force as to make a rotation relative to the holding portion 50. This force acts as a force in the direction for allowing the bolt 51 to cause a shear, between the open port 61 and the rotation-regulating portion 81, in the rotational direction of the rotary member 52. According to this embodiment, the bolt 51 is inserted in the radial direction from the outside to inside of the rotary member 52 in the radial direction of the rotary member 52. Due to this, the shear resistance of the shaft portion of the bolt 51 can receive the force for rotating the step holder 41. By this, a simple structure can effectively regulate the rotation of the step holder 41.

Further, the bolt 51 is inserted in the radial direction of the rotary member 52. Due to this, when the bolt 51 is viewed from the side of the motorcycle 1, a head portion 51b of the bolt 51 is unlikely to be visible. Due to this, the external view of the peripheral portion of the step holder 41 can be improved. Further, the head portion 51b may be concealed in such a manner that seat portions dented downward are provided in the upper faces of the open ports 61, 62 and the head portion 51b is disposed in any of the seat portions.

Further, in the state of FIG. 2, the frontward and rearward movement of the step-holding member 53 is regulated by mating the distal end portion 51a of the bolt 51 with the movement-regulating portion 73 of the shaft portion 66. That is, the frontward and rearward movement of the step-holding member 53 also can be regulated with a simple structure by means of the bolt 51 which regulates the rotation of the rotary member 52.

FIG. 4 shows a state in which the main step 40 has changed its position.

Referring to FIG. 2 and FIG. 4, for changing the position of the main step 40, at first the bolt 51 is removed. Removing the bolt 51 releases the regulation by the rotation-regulating portion 81, thus making it possible to rotate the rotary member 52. Removing the bolt 51 also releases the regulation by the movement-regulating portion 73, thus making it possible to move the step-holding member 53 frontward and rearward.

Then, changing the position of at least any of the rotary member 52 and the step-holding member 53 to a desired position and then mounting the bolt 51 in such a state completes the changing of the position of the main step 40.

For example, in FIG. 4, the rotary member 52 is rotated to the frontward side in such a manner that the upper end of the rotation-regulating portion 81 communicates with the open port 62 of the holding portion 50. Further, in FIG. 4, the step-holding member 53 is moved rearward in such a manner that the movement-regulating portion 74 communicates with the lower end of the rotation-regulating portion 81. Then, the distal end portion 51a of the bolt 51 is inserted from the open port 62 and passes through the rotation-regulating portion 81. Then, the distal end portion 51a of the bolt 51 mates with the movement-regulating portion 74 and is clamped to the movement-regulating portion 74. By this, in FIG. 4, the position of the main step 40 is changed to a position which is rear and upper relative to the position in the state in FIG. 2.

Further, in FIG. 2, moving the step-holding member 53 rearward allows the movement-regulating portion 74 to mate with the distal end portion 51a of the bolt 51. Further, in FIG. 4, moving the step-holding member 53 frontward allows the movement-regulating portion 73 to mate with the distal end portion 51a of the bolt 51.

According to this embodiment, the brake pedal 42 and the master cylinder 46 are mounted to the step holder 41. Due to this, even when the position of the main step 40 is changed, the main step 40's position relative to the brake pedal 42 and the master cylinder 46 remains unchanged. Due to this, the necessity for adjusting the position of each of the brake pedal 42 and the master cylinder 46 in accordance with the changing of the position of the main step 40 can be lessened, thus making it possible to change the position with ease.

Further, the bolt 51 inserted into any of the open ports 61, 62 is used for positioning the step-holding member 53 in the vehicle width direction. Due to this, even the structure in which the inserting portion 80 of the rotary member 52 is opened in the vehicle width direction can appropriately hold the shaft portion 66 with the inserting portion 80. Due to this, in a compact manner, the rotary member 52 can be provided in the vehicle width direction.

Further, even in the state of removing the bolt 51, the flange portion 84 of the rotary member 52 mates with the guide groove 60 of the holding portion 50, thus making it possible to hold the rotary member 52. Due to this, the rotary member 52 can be prevented from being removed during the operation of changing the position, featuring a good operability.

Further, even in the state of removing the bolt 51, mating the guide portion 75 of the step-holding member 53 with the groove portion 85 of the rotary member 52 can hold the step-holding member 53. Due to this, removal of the step-holding member 53 during the operation for changing the position can be prevented, featuring a good operability. Further, the guide portion 75 improves the rigidity of the shaft portion 66 and mates with the groove portion 85. This can reduce a mounting backlash caused in the mounting of the step-holding member 53 to the rotary member 52, thus making it possible to improve the supporting rigidity of the step-holding member 53, leading to a good operability of the main step 40.

Further, the shaft portion 66 in a form of a rectangular rod is inserted into the inserting portion 80 of the rotary member 52. Due to this, the step-holding member 53's rotation in the vehicle width direction can be prevented by the effect of configuration of the shaft portion 66. This can reduce the load acting on the bolt 51 and improve the supporting rigidity of the step-holding member 53, leading to a good operability of the main step 40.

With the protruding portions 61a, 62a, protruding portion 81a and protruding portions 73a, 74a each as a landmark, the position of each of the rotary member 52 and the step-holding member 53 is changed in such a manner as to juxtapose the protruding portions 61a, 62a, protruding portion 81a, and protruding portions 73a, 74a in the radial direction. This changing of the position of each of the rotary member 52 and the step-holding member 53 can set each of the rotary member 52 and the step-holding member 53 in a position proper for inserting the bolt 51. This can facilitate the changing of the position.

Further, the distal end portion of the shaft portion 66 passes through the front open port 59 of the holding portion 50 and is positioned between the lower end 57a of the upper peripheral wall portion 57 and the upper end 58a of the lower peripheral wall portion 58. Due to this, the shaft portion 66 caused to contact the lower end 57a or the upper end 58a at the time of rotating of the step holder 41 can regulate the rotatable range of the step holder 41. Due to this, a simple structure can regulate the rotatable range of the step holder 41.

As explained above, according to the embodiment to which the present invention is applied, the step structure of the motorcycle 1 includes: the main step 40; the step holder 41 serving as the rotor for supporting the main step 40; and the holding portion 50 for holding the step holder 41 to a part of the pivot frame 18, the rotor 41 rotates such that a position of the main step 40 is selectable in a plurality of steps, and the bolt 51 is provided as the regulating member for regulating the rotation of the step holder 41. From the outside toward the inside in the radial direction of the step holder 41, the bolt 51 is adapted to be inserted into any of the open port 61, 62 provided in the holding portion 50. The bolt 51 inserted from the outside toward the inside in the radial direction of the step holder 41 is unlikely to be visible from the side of the motorcycle 1. Due to this, the bolt 51 can be prevented from being remarkable, thus making it possible to improve the external view. Further, the load in the rotary direction of the step holder 41 can be received with the bolt 51 inserted in the radial direction of the step holder 41. Due to this, the load endurance of the main step 40 can be improved with the simple structure.

Further, the holding portion 50 is provided integral with the pivot frame 18. Not limited to this, however, the structure may be such that a holding portion formed separate from the pivot frame 18 is mounted to the pivot frame 18. Further, the explanation has been made based on that the holding portion 50 is provided at the pivot frame 18. However, not limited to this, the holding portion 50 may be provided at any other member as long as the other member can function as a frame capable of supporting the step holder 41.

Further, the step holder 41 includes the rotary member 52 and the step-holding member 53, the rotary member 52 is held to the holding portion 50, and the step-holding member 53 is provided separate from the rotary member 52 and supports the main step 40. In the radial direction of the rotary member 52, the step-holding member 53 is inserted into the rotary member 52, such that the movement of the step-holding member 53 is regulated by the distal end portion 51a of the bolt 51. By this, the position of the step-holding member 53 can be adjusted into the direction for inserting the step-holding member 53 and is thereby fixed with the distal end portion 51a of the bolt 51. Due to this, in combination with the positon-adjusting by the rotation of the step holder 41, the position of the main step 40 can be adjusted in the plurality of steps. Further, position-adjusting of each of the rotary member 52 and the step-holding member 53 can change the position of the main step 40. Due to this, the main step 40 can be simplified in configuration, thus making it possible to improve the external view.

Further, the step holder 41 includes the rotation-regulating portion 81 with which the bolt 51 mates, the bolt 51 is inserted into the at least one open ports 61, 62 of the holding portion 50, and the at least one open ports 61, 62 includes a plurality of the open ports 61, 62 provided in the circumferential direction of the holding portion 50. Due to this, inserting the bolt 51 into any of the plurality of the open ports 61, 62 provided in the circumferential direction of the holding portion 50 to thereby have the bolt 51 mate with the rotation-regulating portion 81 of the step holder 41 can fix the step holder 41 in the plurality of rotary positions. Further, providing the open ports 61, 62 in the holding portion 50 can secure the space for providing open ports larger than the space secured in the case of providing any other member positioned inside the holding portion 50 in the radial direction, the example of the other member including the plurality of open ports (rotation-regulating portion) in the rotary member 52. Thus, the plurality of open ports 61, 62 can be provided with ease.

The step-holding member 53 includes at least one movement-regulating portions 73, 74 with which the distal end portion 51a of the regulating member 51 mates, and the at least one movement-regulating portions 73, 74 includes a plurality of the movement-regulating portions 73, 74 in the direction for inserting the step-holding member 53 to the rotary member 52. Due to this, mating the distal end portion 51a of the bolt 51 with any of the plurality of the movement-regulating portions 73, 74 provided in the direction for inserting the step-holding member 53 can fix the step-holding member 53 to the plurality of positions.

Further, the step-holding member 53 includes the step-holding portion 65 and the shaft portion 66, the main step 40 is mounted to the step-holding portion 65, and the shaft portion 66 extends out from the step-holding portion 65 and is inserted into the inserting portion 80 of the rotary member 52. Due to this, adjusting the position for inserting the shaft portion 66 of the step-holding member 53 into the inserting portion 80 of the rotary member 52 can change the position of the main step 40.

Further, the base end portion of the shaft portion 66 includes taper portions 72, 72 so inclined that the shaft portion 66 becomes thicker as the taper portions 72, 72 approach closer to the step-holding portion 65 side, and the inserting portion 80 of the rotary member 52 includes the inlet portion 82 for receiving the taper portions 72, 72 while the inlet portion 82 is so inclined as to abut on the taper portions 72, 72. By this, the taper portions 72, 72 work to secure the strength and rigidity of the shaft portion 66, and the shaft portion 66 abutting on the inlet portion 82 can determine the position of the shaft portion 66 in the direction of inserting the shaft portion 66 and in the direction orthogonal to this inserting direction. Further, forming the taper portions 72, 72 can enlarge the area of contact of the shaft portion 66's base end portion with the inlet portion 82, thus making it possible to reduce the load applied to the inlet port 82.

Further, the step-holding member 53 includes the guide portion 75 protruding in the radial direction of the rotary member 52 from the shaft portion 66, and the rotary member 52 includes the groove portion 85 into which the guide portion 75 is inserted. By this, the guide portion 75 can improve the strength and rigidity of the shaft portion 66 and can position the step-holding member 53 in the axial direction of the rotary member 52.

Further, the shaft portion 66 of the step-holding member 53 is the shaft with the external configuration of the rectangle. The inserting portion 80 of the rotary member 52 includes: the upper guide face 80a adapted to abut on the upper face 66a of the shaft portion 66, the lower guide face 80b adapted to abut on the lower face 66b of the shaft portion 66, the inside guide face 80c adapted to abut on the inside face 66c in the vehicle width direction of the shaft portion 66, and the open portion 80d for allowing the outside face 66d in the vehicle width direction of the shaft portion 66 to be exposed outward. By this, allowing the shaft portion 66 with the external configuration of the rectangle to abut on the upper guide face 80a and lower guide face 80b of the inserting portion 80 can prevent the step-holding member 53 from making the rotation around the shaft portion 66. Further, the inserting portion 80 of the rotary member 52 includes the open portion 80d opened on the outside face in the vehicle width direction. This can form the inserting portion 80 with ease. Also, by this, in the compact manner, the rotary member 52 can be made in the vehicle width direction.

Further, the shaft portion 66 is inserted into the inserting portion 80 of the rotary member 52 and passes through the rotary member 52 in the radial direction. Further, the holding portion 50 includes the front open port 59 into which the distal end portion of the shaft portion 66 is inserted. By this, the rotatable range of the rotary member 52 can be regulated to the range in which the distal end portion of the shaft portion 66 is moveable in the front open port 59.

Further, the frame provided with the holding portion 50 is the pivot frame 18 for supporting the swing arm 13 via the pivot shaft 22, and the rear wheel 3 is journaled with the swing arm 13. Due to this, rotating the step holder 41 around the holding portion 50 provided at the pivot frame 18 can adjust the position of the main step 40.

Further, the brake pedal 42 to which the operation is input by the rider is mounted to the step holder 41. Due to this, adjusting the position of the step holder 41 allows the brake pedal 42 to move integrally with the step holder 41. Due to this, even when the position of the main step 40 is adjusted, the main step 40's position relative to the brake pedal 42 can be maintained.

Further, from the upper side, the bolt 51 is inserted into any of the open ports 61, 62 of the holding portion 50. Due to this, the bolt 51 can be easily inserted into any of the open ports 61, 62.

Further, the above embodiment shows one embodiment to which the present invention is applied, and the present invention is not limited to the above embodiment.

The above embodiment has made an explanation by raising an example of the right step structure. However, the left step structure is formed symmetrical (right and left) with the right step structure. In detail, the left step structure may fix, in place of the master cylinder 46 and the brake pedal 42, a shift pedal (operating portion) to the step-holding portion 65 of the step holder 41, where a gear-shifting operation of a transmission of the engine 11 is input to the shift pedal (operating portion) by the rider.

Further, the above embodiment has made an explanation by raising the bolt 51 as a regulating member. However, the regulating member may be, for example, a pin to be inserted in the radial direction of the rotor.

Further, the above embodiment has made an explanation with the plurality of open ports 61, 62 provided in the circumferential direction of the holing portion 50. However, the present invention is not limited to this. For example, another structure is allowed in which the holding portion 50 includes the open port 61 only and the rotary member 52 includes a plurality (for example, two) of rotation-regulating portions 81 juxtaposed in the circumferential direction of the holding portion 50. With this structure, the bolt 51 inserted into the open port 61 is inserted into any of a plurality of rotation-regulating portions 81, 81 provided in the circumferential direction. Such inserting of the bolt 51 can regulate the rotary position of the rotary member 52 to a plurality of positions. Further, the plurality of rotation-regulating portions 81 are provided in the circumferential direction of the holding portion 50. Due to this, the open port 61 of the holding portion 50 can be made one in number. Due to this, the open port 61 can be prevented from being remarkable, thus making it possible to improve an external view.

Further, the above embodiment has made an explanation that the shaft portion 66 is a shaft with an external configuration of a rectangle. However, not limited to this, the shaft portion may have a circular cross section.

### [Reference Signs List]

- 1: Motorcycle (Saddle-ride type vehicle)
- 3: Rear wheel (Wheel)
- 13: Swing arm
- 18: Pivot frame (Frame)
- 22: Pivot shaft
- 40: Main step
- 41: Step holder (Rotor)
- 42: Brake pedal (Operating portion)
- 50: Holding portion
- 51: Bolt (Regulating member)
- 51a: Distal end portion (End portion)
- 52: Rotary member
- 53: Step-holding member
- 59: Front open port
- 61, 62: Open port
- 65: Step-holding member
- 66: Shaft portion
- 66a: Upper face
- 66b: Lower face
- 66c: Inside face
- 66d: Outside face
- 72, 72: Taper portion
- 73, 74: Movement-regulating portion
- 75: Guide portion
- 80: Inserting portion
- 80a: Upper guide face
- 80b: Lower guide face
- 80c: Inside guide face
- 80d: Open portion
- 81: Rotation-regulating portion
- 82: Inlet portion
- 85: Groove portion

## Claims

1. A step structure of a saddle-ride type vehicle, comprising:
a main step (40);
a rotor (41) for supporting the main step (40); and
a holding portion (50) for rotatably holding the rotor (41) to a part of a frame (18), the rotor (41) being rotatable such that a position of the main step (40) is selectable in a plurality of steps,
wherein the step structure further includes a regulating member (51) for regulating the rotation of the rotor (41), and
wherein the regulating member (51) is adapted to be inserted into at least one open port (61, 62) from an outside toward an inside in a radial direction of the rotor (41), the at least one open port (61, 62) being provided in the holding portion (50),
**characterized in that** the rotor (41) includes a rotary member (52) and a step-holding member (53), the rotary member (52) being held to the holding portion (50), the step-holding member (53) being provided separate from the rotary member (52) and supporting the main step (40), and
the step-holding member (53) is inserted into the rotary member (52) in a radial direction of the rotary member (52), such that a movement of the step-holding member (53) is regulated by an end portion (51a) of the regulating member (51).

2. A step structure of a saddle-ride type vehicle according to claim 1,
wherein the rotor (41) includes a rotation-regulating portion (81) with which the regulating member (51) mates, the regulating member (51) being inserted into the at least one open port (61, 62) of the holding portion (50), and
the at least one open port (61, 62) includes a plurality of open ports (61, 62) provided in a circumferential direction of the holding portion (50).

3. A step structure of a saddle-ride type vehicle according to claim 1,
wherein the rotor (41) includes at least one rotation-regulating portion (81) with which the regulating member (51) mates, the regulating member (51) being inserted into the open port (61) of the holding portion (50), and
the at least one rotation-regulating portion (81) includes a plurality of rotation-regulating portions (81) provided in a circumferential direction of the holding portion (50).

4. A step structure of a saddle-ride type vehicle according to claim 2 or 3,
wherein the step-holding member (53) includes at least one movement-regulating portion (73, 74) with which the end portion (51a) of the regulating member (51) mates, and
the at least one movement-regulating portion (73, 74) includes a plurality of movement-regulating portions (73, 74) provided in a direction for inserting the step-holding member (53) to the rotary member (52).

5. A step structure of a saddle-ride type vehicle according to any of claims 2 to 4,
wherein the step-holding member (53) includes a step-holding portion (65) and a shaft portion (66),
the main step (40) is mounted to the step-holding portion (65), and
the shaft portion (66) extends out from the step-holding portion (65) and is inserted into an inserting portion (80) of the rotary member (52).

6. A step structure of a saddle-ride type vehicle according to claim 5,
wherein a base end portion of the shaft portion (66) includes a taper portion (72) so inclined that the shaft portion (66) becomes thicker as the taper portion (72) approaches closer to the step-holding portion (65) side, and
the inserting portion (80) of the rotary member (52) includes an inlet portion (82) for receiving the taper portion (72), while the inlet portion (82) is so inclined as to abut on the taper portion (72).

7. A step structure of a saddle-ride type vehicle according to claim 5 or 6,
wherein the step-holding member (53) includes a guide portion (75) protruding in the radial direction of the rotary member (52) from the shaft portion (66), and
the rotary member (52) includes a groove portion (85) into which the guide portion (75) is inserted.

8. A step structure of a saddle-ride type vehicle according to any of claims 4 to 7,
wherein the shaft portion (66) of the step-holding member (53) is a shaft with an external configuration of a rectangle, and
the inserting portion (80) of the rotary member (52) includes:
an upper guide face (80a) adapted to abut on an upper face (66a) of the shaft portion (66);
a lower guide face (80b) adapted to abut on a lower face (66b) of the shaft portion (66);
an inside guide face (80c) adapted to abut on an inside face (66c) in a vehicle width direction of the shaft portion (66); and
an open portion (80d) for allowing an outside face (66d) in the vehicle width direction of the shaft portion (66) to be exposed outward.

9. A step structure of a saddle-ride type vehicle according to any of claims 4 to 8,
wherein the shaft portion (66) is inserted into the inserting portion (80) of the rotary member (52) and thereby radially passes through the rotary member (52), and
the holding portion (50) includes a front open port (59) into which a distal end portion of the shaft portion (66) is inserted.

10. A step structure of a saddle-ride type vehicle according to any of claims 1 to 9,
wherein the frame (18) is a pivot frame (18) for supporting a swing arm (13) via a pivot shaft (22), the swing arm (13) pivotally supporting a rear wheel (3).

11. A step structure of a saddle-ride type vehicle according to any of claims 1 to 10,
wherein an operating portion (42) to which an operation is input by a rider is mounted to the rotor (41).

12. A step structure of a saddle-ride type vehicle according to any of claims 1 to 11,
wherein the regulating member (51) is inserted from an upper side into any of the open ports (61, 62) of the holding portion (50).

## Patentansprüche

1. Fußrastenstruktur für ein Fahrzeug vom Satteltyp, umfassend:
eine Hauptfußraste (40);
einen Rotor (41) zum Abstützen der Hauptfußraste (40); und
einen Halteabschnitt (50) zum drehbaren Halten des Rotors (41) an einem Teil des Rahmens (18), wobei der Rotor (41) derart drehbar ist, dass eine Position der Hauptfußraste (40) mit einer Vielzahl von Fußrasten auswählbar ist,
wobei die Fußrastenstruktur weiter ein Regulierungselement (51) zum Regulieren der Drehung des Rotors (41) beinhaltet, und
wobei das Regulierungselement (51) dazu ausgelegt ist, in mindestens einen offenen Anschluss (61, 62) von außerhalb nach innen in einer radialen Richtung des Rotors (41) eingeführt zu werden, wobei der mindestens eine offene Anschluss (61, 62) in dem Halteabschnitt (50) bereitgestellt ist,
**dadurch gekennzeichnet, dass** der Rotor (41) ein Drehelement (52) und ein Fußrastenhalteelement (53) beinhaltet, wobei das Drehelement (52) an dem Halteabschnitt (50) gehalten wird, das Fußrastenhalteelement (53) separat von dem Drehelement (52) bereitgestellt ist und die Hauptfußraste (40) abstützt, und
das Fußrastenhalteelement (53) in einer radialen Richtung des Drehelements (52) in das Drehelement (52) eingeführt ist, so dass eine Bewegung des Fußrastenhalteelements (53) durch einen Endabschnitt (51a) des Regulierungselements (51) reguliert wird.

2. Fußrastenstruktur für ein Fahrzeug vom Satteltyp nach Anspruch 1,
wobei der Rotor (41) einen Drehregulierungsabschnitt (81) beinhaltet, mit dem das Regulierungselement (51) zusammenpasst, wobei das Regulierungselement (51) in den mindestens einen offenen Anschluss (61, 62) des Halteabschnitts (50) eingeführt wird und
der mindestens eine offene Anschluss (61, 62) eine Vielzahl von offenen Anschlüssen (61, 62) beinhaltet, die in einer Umfangsrichtung des Halteabschnitts (50) bereitgestellt ist.

3. Fußrastenstruktur für ein Fahrzeug vom Satteltyp nach Anspruch 1,
wobei der Rotor (41) mindestens einen Drehregulierungsabschnitt (81) aufweist, mit dem das Regulierungselement (51) zusammenpasst, wobei das Regulierungselement (51) in den offenen Anschluss (61) des Halteabschnitts (50) eingeführt ist und
der mindestens eine Drehregulierungsabschnitt (81) eine Vielzahl von Drehregulierungsabschnitten (81) beinhaltet, die in einer Umfangsrichtung des Halteabschnitts (50) bereitgestellt ist.

4. Fußrastenstruktur für ein Fahrzeug vom Satteltyp nach Anspruch 2 oder 3,
wobei das Fußrastenhalteelement (53) mindestens einen Bewegungsregulierungsabschnitt (73, 74) beinhaltet, mit dem der Endabschnitt (51a) des Regulierungselements (51) zusammenpasst, und
wobei der mindestens eine Bewegungsregulierungsabschnitt (73, 74) eine Vielzahl von Bewegungsregulierungsabschnitten (73, 74) beinhaltet, die in einer Richtung zum Einführen des Fußrastenhalteelements (53) in das Drehelement (52) bereitgestellt ist.

5. Fußrastenstruktur für ein Fahrzeug vom Satteltyp nach einem der Ansprüche 2 bis 4,
wobei das Fußrastenhalteelement (53) einen Fußrastenhalteabschnitt (65) und einen Wellenabschnitt (66) beinhaltet,
wobei die Hauptfußraste (40) an dem Fußrastenhalteabschnitt montiert ist und
sich der Wellenabschnitt (66) aus dem Fußrastenhalteabschnitt (65) heraus erstreckt und in einen Einführungsabschnitt (80) des Drehelements (52) eingeführt ist.

6. Fußrastenstruktur für ein Fahrzeug vom Satteltyp nach Anspruch 5,
wobei ein Basisendabschnitt des Wellenabschnitts (66) einen sich verjüngenden Abschnitt (72) beinhaltet, der so geneigt ist, dass der Wellenabschnitt (66) dicker wird, wenn sich der sich verjüngende Abschnitt (72) der Seite des Fußrastenhalteabschnitts (65) annähert, und
wobei der Einführungsabschnitt (80) des Drehelements (52) einen Einlassabschnitt (82) zum Aufnehmen des sich verjüngenden Abschnitts (72) beinhaltet, während der Einlassabschnitt (82) derart geneigt ist, dass er an den sich verjügenden Abschnitt (72) angrenzt.

7. Fußrastenstruktur für ein Fahrzeug vom Satteltyp nach Anspruch 5 oder 6,
wobei das Fußrastenhalteelement (53) einen Führungsabschnitt (75) beinhaltet, der in radialer Richtung des Drehelements (52) von dem Wellenabschnitt (66) vorsteht und
das Drehelement (52) einen Nutabschnitt (85) beinhaltet, in den der Führungsabschnitt (75) eingeführt ist.

8. Fußrastenstruktur für ein Fahrzeug vom Satteltyp nach einem der Ansprüche 4 bis 7,
wobei der Wellenabschnitt (66) des Fußrastenhalteelements (53) eine Welle mit einer äußeren Konfiguration eines Rechtecks ist und
der Einführungsabschnitt (80) des Drehelements (52) beinhaltet:
eine obere Führungsfläche (80a), die dazu ausgelegt ist, an einer oberen Fläche (66a) des Wellenabschnitts (66) anzugrenzen;
eine untere Führungsfläche (80b), die dazu ausgelegt ist, an einer unteren Fläche (66b) des Wellenabschnitts (66) anzugrenzen;
eine innere Führungsfläche (80c), die dazu ausgelegt ist, an einer inneren Fläche (66c) in Fahrzeugbreitenrichtung des Wellenabschnitts (66) anzugrenzen; und
einen offenen Abschnitt (80d), um zu ermöglichen, dass eine äußere Fläche (66d) in der Fahrzeugbreitenrichtung des Wellenabschnitts (66) nach außen freigelegt wird.

9. Fußrastenstruktur für ein Fahrzeug vom Satteltyp nach einem der Ansprüche 4 bis 8,
wobei der Wellenabschnitt (66) in den Einführungsabschnitt (80) des Drehelements (52) eingeführt ist und dadurch radial durch das Drehelement (52) durchgeht, und
der Halteabschnitt (50) einen vorderen offenen Anschluss (59) beinhaltet, in den ein distaler Endabschnitt des Wellenabschnitts (66) eingeführt ist.

10. Fußrastenstruktur für ein Fahrzeug vom Satteltyp nach einem der Ansprüche 1 bis 9,
wobei der Rahmen (18) ein Schwenkrahmen (18) zum Abstützen eines Schwenkarms (13) über eine Schwenkwelle (22) ist, wobei der Schwenkarm (13) ein Hinterrad (3) schwenkbar lagert.

11. Fußrastenstruktur für ein Fahrzeug vom Satteltyp nach einem der Ansprüche 1 bis 10,
wobei ein Betätigungsabschnitt (42), in den eine Betätigung durch den Fahrer eingegeben wird, an dem Rotor (41) montiert ist.

12. Fußrastenstruktur für ein Fahrzeug vom Satteltyp nach einem der Ansprüche 1 bis 11,
wobei das Regulierungselement (51) von einer oberen Seite in einen beliebigen der offenen Anschlüsse (61, 62) des Halteabschnitts (50) eingeführt ist.

## Revendications

1. Structure de support de pied d'un véhicule du type à enfourcher, comprenant :
un support de pied principal (40) ;
un rotor (41) pour le support du support de pied principal (40) ; et
une partie de maintien (50) pour le maintien rotatif du rotor (41) sur une partie d'un cadre (18), le rotor (41) étant rotatif de sorte qu'une position du support de pied principal (40) soit sélectionnable dans une pluralité de supports de pied,
dans laquelle la structure de support de pied inclut en outre un élément de régulation (51) pour la régulation de la rotation du rotor (41), et
dans laquelle l'élément de régulation (51) est adapté pour être inséré dans au moins un orifice ouvert (61, 62) d'un côté extérieur vers un côté intérieur dans une direction radiale du rotor (41), l'au moins un orifice ouvert (61, 62) étant prévu dans la partie de maintien (50),
**caractérisée en ce que** le rotor (41) inclut un élément rotatif (52) et un élément de maintien de support de pied (53), l'élément rotatif (52) étant maintenu sur la partie de maintien (50), l'élément de maintien de support de pied (53) étant prévu séparément de l'élément rotatif (52) et supportant le support de pied principal (40), et
l'élément de maintien de support de pied (53) est inséré dans l'élément rotatif (52) dans une direction radiale de l'élément rotatif (52) de sorte qu'un mouvement de l'élément de maintien de support de pied (53) soit régulé par une partie d'extrémité (51a) de l'élément de régulation (51).

2. Structure de support de pied d'un véhicule du type à enfourcher selon la revendication 1,
dans laquelle le rotor (41) inclut une partie de régulation de rotation (81) avec laquelle l'élément de régulation (51) s'accouple, l'élément de régulation (51) étant inséré dans l'au moins un orifice ouvert (61, 62) de la partie de maintien (50), et
l'au moins un orifice ouvert (61, 62) inclut une pluralité d'orifices ouverts (61, 62) prévus dans une direction circonférentielle de la partie de maintien (50).

3. Structure de support de pied d'un véhicule du type à enfourcher selon la revendication 1,
dans laquelle le rotor (41) inclut au moins une partie de régulation de rotation (81) avec laquelle l'élément de régulation (51) s'accouple, l'élément de régulation (51) étant inséré dans l'orifice ouvert (61) de la partie de maintien (50), et
l'au moins une partie de régulation de rotation (81) inclut une pluralité de parties de régulation de rotation (81) prévues dans une direction circonférentielle de la partie de maintien (50).

4. Structure de support de pied d'un véhicule du type à enfourcher selon la revendication 2 ou 3,
dans laquelle l'élément de maintien de support de pied (53) inclut au moins une partie de régulation de mouvement (73, 74) avec laquelle la partie d'extrémité (51a) de l'élément de régulation (51) s'accouple, et
l'au moins une partie de régulation de mouvement (73, 74) inclut une pluralité de parties de régulation de mouvement (73, 74) prévues dans une direction pour l'insertion de l'élément de maintien de support de pied (53) dans l'élément rotatif (52).

5. Structure de support de pied d'un véhicule du type à enfourcher selon l'une quelconque des revendications 2 à 4,
dans laquelle l'élément de maintien de support de pied (53) inclut une partie de maintien de support de pied (65) et une partie d'arbre (66),
le support de pied principal (40) est monté sur la partie de maintien de support de pied (65), et
la partie d'arbre (66) s'étend hors de la partie de maintien de support de pied (65) et est insérée dans une partie d'insertion (80) de l'élément rotatif (52).

6. Structure de support de pied d'un véhicule du type à enfourcher selon la revendication 5,
dans laquelle une partie d'extrémité de base de la partie d'arbre (66) inclut une partie conique (72) inclinée de sorte que la partie d'arbre (66) s'épaississe lorsque la partie conique (72) s'approche plus près du côté de la partie de maintien de support de pied (65), et
la partie d'insertion (80) de l'élément rotatif (52) inclut une partie d'entrée (82) pour la réception de la partie conique (72) alors que la partie d'entrée (82) est inclinée de sorte à buter contre la partie conique (72).

7. Structure de support de pied d'un véhicule du type à enfourcher selon la revendication 5 ou 6,
dans laquelle l'élément de maintien de support de pied (53) inclut une partie de guidage (75) faisant saillie dans la direction radiale de l'élément rotatif (52) de la partie d'arbre (66), et
l'élément rotatif (52) inclut une partie formant rainure (85) dans laquelle la partie de guidage (75) est insérée.

8. Structure de support de pied d'un véhicule du type à enfourcher selon l'une quelconque des revendications 4 à 7,
dans laquelle la partie d'arbre (66) de l'élément de maintien de support de pied (53) est un arbre avec une configuration externe d'un rectangle, et
la partie d'insertion (80) de l'élément rotatif (52) inclut :
une face de guidage supérieure (80a) adaptée pour buter contre une face supérieure (66a) de la partie d'arbre (66) ;
une face de guidage inférieure (80b) adaptée pour buter contre une face inférieure (66b) de la partie d'arbre (66) ;
une face de guidage intérieure (80c) adaptée pour buter contre une face intérieure (66c) dans une direction de largeur de véhicule de la partie d'arbre (66) ; et
une partie ouverte (80d) pour permettre à une face extérieure (66d) dans la direction de largeur de véhicule de la partie d'arbre (66) d'être exposée vers l'extérieur.

9. Structure de support de pied d'un véhicule du type à enfourcher selon l'une quelconque des revendications 4 à 8,
dans laquelle la partie d'arbre (66) est insérée dans la partie d'insertion (80) de l'élément rotatif (52) et ainsi passe radialement au travers de l'élément rotatif (52), et
la partie de maintien (50) inclut un orifice ouvert avant (59) dans lequel une partie d'extrémité distale de la partie d'arbre (66) est insérée.

10. Structure de support de pied d'un véhicule du type à enfourcher selon l'une quelconque des revendications 1 à 9,
dans laquelle le cadre (18) est un cadre de pivotement (18) pour le support d'un bras oscillant (13) via un arbre de pivotement (22), le bras oscillant (13) supportant de manière pivotante une roue arrière (3).

11. Structure de support de pied d'un véhicule du type à enfourcher selon l'une quelconque des revendications 1 à 10,
dans laquelle une partie opérationnelle (42) sur laquelle un actionnement est entré par un pilote est montée sur le rotor (41).

12. Structure de support de pied d'un véhicule du type à enfourcher selon l'une quelconque des revendications 1 à 11,
dans laquelle l'élément de régulation (51) est inséré depuis un côté supérieur dans l'un quelconque des orifices ouverts (61, 62) de la partie de maintien (50).
